# EUROPEAN PATENT SPECIFICATION

(11) **EP 3 458 688 B1**
(45) Date of publication and mention of the grant of the patent: **12.07.2023**
(21) Application number: 17726375.3
(22) Date of filing: 16.05.2017
(51) Int. Cl.: F01K 23/10, F01K 25/06, F01K 25/08

(54) **COGENERATIVE ORGANIC RANKINE CYCLE SYSTEM**
GEKOPPELTES ORGANISCHES RANKINE-ZYKLUSSYSTEM
SYSTÈME À CYCLE DE RANKINE ORGANIQUE COGENERATIF

(30) Priority: 18.05.2016 IT UA20163546
(43) Date of publication of application: 27.03.2019
(73) Proprietor: Turboden S.p.A., 25124 Brescia (IT)
(72) Inventor: GAIA, Mario, 25124 Brescia (IT); BINI, Roberto, 25124 Brescia (IT); VESCOVO, Riccardo, 25124 Brescia (IT); SPAGNOLI, Emma, 25124 Brescia (IT)
(74) Representative: Bruni, Giovanni
(86) International application number: PCT/IB2017/052880
(87) International publication number: WO 2017/199170

(56) References cited:
- DE-A1- 19 907 512
- US-A1- 2006 010 872
- US-A1- 2008 168 772
- US-A1- 2012 042 650

## Description

### Technical field of the invention

The present invention relates to a cogenerative organic Rankine cycle (ORC)the peculiar characteristics of which allow to obtain a high first principle yield for the production of high temperature saturated or overheated steam through the condensation heat of the organic fluid.

### Background art

As it is known, a thermodynamic cycle is termed as a finite succession of thermodynamic transformations (such for example isotherms, isocores, isobars or adiabatics) at the end of which the system returns to its initial state. In particular, an ideal Rankine cycle is a thermodynamic cycle consisting of two adiabatic and two isobaric transformations, with two phase changes: from liquid to steam and from steam to liquid. Its purpose is to transform heat into work. This cycle is generally adopted mainly in power generation systems and uses as a driving liquid both liquid and vaporized water, with the so-called steam turbine.

More specifically, organic Rankine cycles (ORC) have been conceived and realized by using high molecular mass organic fluids for the most different applications, especially for the exploitation of low-medium enthalpy thermal sources. As in other steam cycles, the ORC cycle system includes one or more pumps for supplying the organic working fluid, one or more heat exchangers to perform preheating, vaporization and possibly overheating in supercritical conditions of the same working fluid, a turbine or volumetric expander for the fluid expansion, which is mechanically connected to an electric generator or a working machine, a condenser carrying the organic liquid back to the liquid state and possibly a regenerator for recovering heat downstream of the turbine and upstream of the condenser.

Also known is the cogeneration process providing for the simultaneous production of mechanical energy (usually transformed into electricity) and heat. The heat produced can be used, for example, for heating or district heating of buildings and/or manufacturing industrial processes. Cogeneration uses traditional generation systems, internal combustion engines, water vapor turbines, gas turbines, combined cycles and ORC cycles.

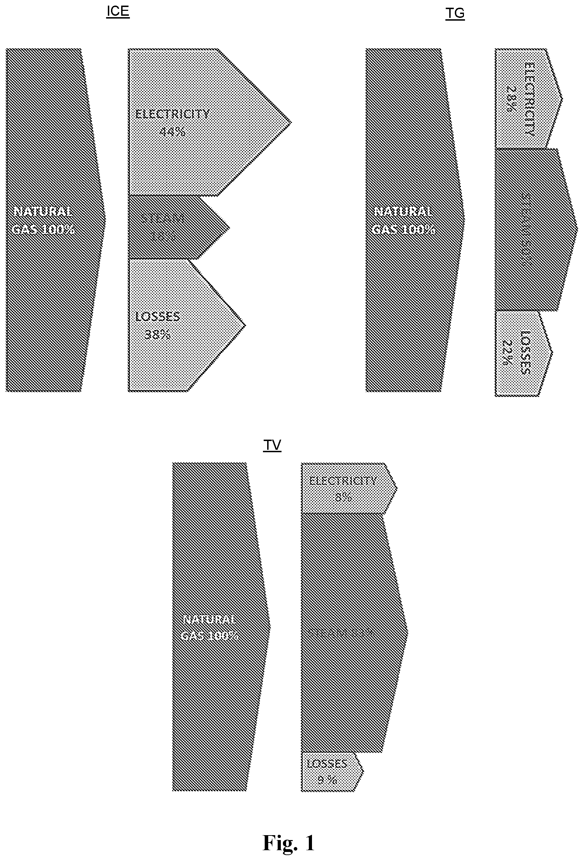

Alternative combustion engines, gas turbine or steam turbine systems show their limits in case of high temperature cogeneration. High temperature cogeneration will be understood hereafter as the production of steam, water, air or any other liquid or gaseous substance, at a temperature higher than 120°C (corresponding to the saturation temperature of water at about 2 bar). In particular, in the following numerical examples, cogeneration involves the production of saturated steam at about 12 bar, i.e. at 190°C. Figure 1 shows typical energy balances for alternative ICE internal combustion engines, TG gas turbine systems and TV steam turbine systems. Starting from a 100% energy content of the fuel, the Figure represents the percentages of the electrical energy and thermal energy (steam or hot water) obtained from the respective "engine" and their losses, also including the low temperature thermal content, which cannot be used in the cogeneration system and therefore is released in various forms to the environment. By way of example, as shown in Figure 1, an alternative internal combustion engine using about 1.5 MW of natural gas transforms the energy contained in the fuel into 44% electric power, in saturated steam (at about 190°C) into about 18%. As a whole, a first principle yield is obtained (which is meant as the ratio between the sum of high-temperature electrical energy and heat contained in the saturated steam and produced by the system, and the input energy as chemical energy of the used fuel) which is about 62%. For completeness of exposure it should be noted that the percentage referred to as losses ("Losses") again includes both the appropriately stated losses and the percentage of low temperature heat which can not be used in the system.

A gas turbine of the same electrical power, fed by natural gas, transforms 28% of the fuel energy into electricity and 50% into high temperature thermal energy (saturated steam at about 190° C). Therefore the first principle yield for the production of electricity and heat at high temperature is 78%.

There are industrial processes, in particular in manufacturing industries, such as those typical of paper mills or food industries, which are characterized by a high demand for high temperature thermal energy, compared to the electric demand, mainly in the form of steam (for example, at 190°C). In these cases, the internal combustion engine which produces a certain electrical power is so efficient from the electrical point of view, that it allows for a minimal steam output, which is not sufficient to meet the heat demand of the industry itself. As can be seen from Figure 1, for an electric power unit, the alternative engine produces about 0,41 thermal units in the form of steam at 190°C, the gas turbine produces 1,79. For the above mentioned applications, a definitely higher value would be required.

One possible alternative is represented by a traditional water vapor Rankine cycle, which is further realized in favor of a high temperature steam production, since, as can be seen from Figure 1, the fuel energy is transformed by 8% In electricity and by 83% in high temperature steam, for a first principle yield equal to 91%. In this case, the ratio between high-temperature power and electrical power is 10,4. However, medium to small size steam generators are poorly efficient from the electrical point of view (as shown by the above-mentioned too high ratio) and have significantly higher installation and maintenance costs than a similar ORC system.

ORC systems are also a well-established technology in the cogenerative field: the heat extracted from the condenser is typically used to produce hot water at 60-80°C. An ORC system powered by biomasses of about 1,5 MW of gross electric power in the cogeneration system can achieve an electrical performance of 16% compared to fuel power; the thermal power discharged to the water of the condenser (60/80°C) is equal to 70%. Usually the ORC system is powered by a diathermic oil circuit (for example, Therminol 66), which can withstand a maximum bulk temperature of 345°C; in turn, the traditionally used organic fluids (e.g. siloxanes and hydrocarbons) can work up to about 300°C. In addition to these temperatures, oil and organic fluids are subjected to a thermo-chemical degradation.

For producing saturated steam at 190°C by using the heat discharged by the condenser of a conventional ORC, the electric cycle efficiency would be strongly influenced by the small temperature difference between hot (about 300°C) and cold (about 190°C) sources.

In addition, diathermic oil and organic fluids typically used in biomass ORC systems may not be suitable for recovering heat efficiently from fumes at higher temperatures such as those produced by combustion of methane gas, which the main source of thermal power for industries.

Document DE19907512A1 discloses an energy conversion apparatus for use in a thermal Organic Rankine Cycle (ORC) process in at least two cascade arrangements, such that a greater temperature differential is achieved between the cascade inlet and outlet. This increase in the temperature differential is achieved by providing a fluid regenerator in each stage. Documents US2008/0168772 A1 and US2006/0010872 A1 disclose further organic Rankine systems.

There is therefore a need to define an organic Rankine cycle system suitable for high temperature cogeneration and without the aforementioned drawbacks.

### Synthesis of the Invention

The object of the present invention is, therefore, a cogenerative organic Rankine cycle system capable of releasing high thermal power at high temperature, preferably producing steam between 2 and 50 bar, with a high first principle efficiency, good electrical efficiency and high production of thermal units (with values of about 5,5 for the production of saturated steam at 190°C) for an electrical power unit.

According to the present invention, there is therefore described a cogeneration organic Rankine cycle, the features of which are disclosed in the attached independent claim.

Further ways of implementing said method, which are preferred and/or particularly advantageous, are described in accordance with the features disclosed in the dependent attached claims.

### Brief description of the drawings

The invention will now be described with reference to the attached drawings, which illustrate some examples of non limiting embodiments, in which:
- Figure 1 shows the energy balance for alternative motors, gas cycles and steam cycles;
- Figure 2 shows a temperature-power diagram of a cogeneration system according to the present invention for saturated steam generated at 12 bar;
- Figure 3 shows the energy balance of a cogeneration ORC system according to the present invention;
   Figures 4 to 7 show different embodiments not being part of the present invention:

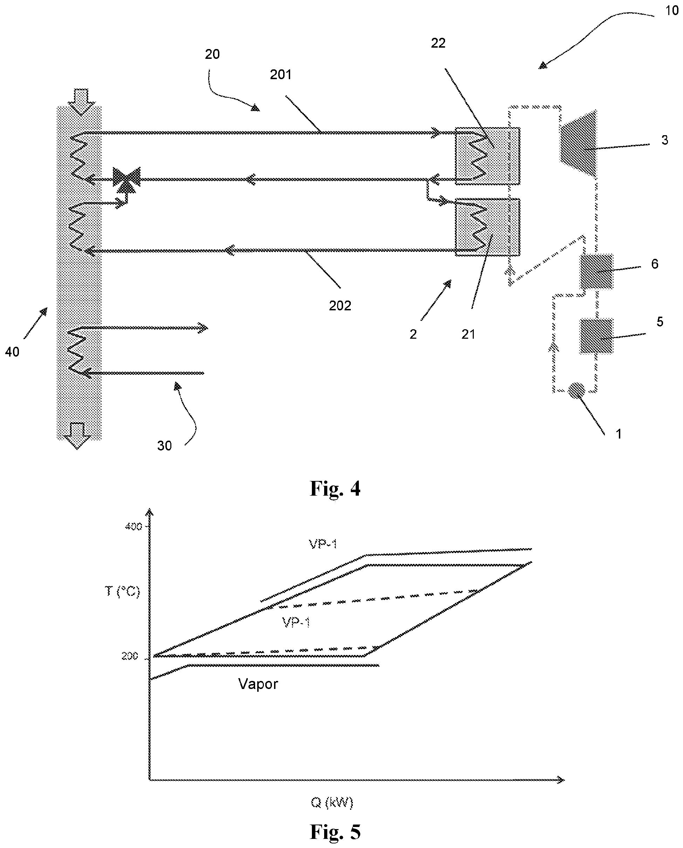

      - Figure 4 shows a diagram of a COG system, wherein the oil flow rate to the preheater is just a fraction of the total;
      - Figure 5 shows the temperature-power diagram of the ORC system of Figure 4;

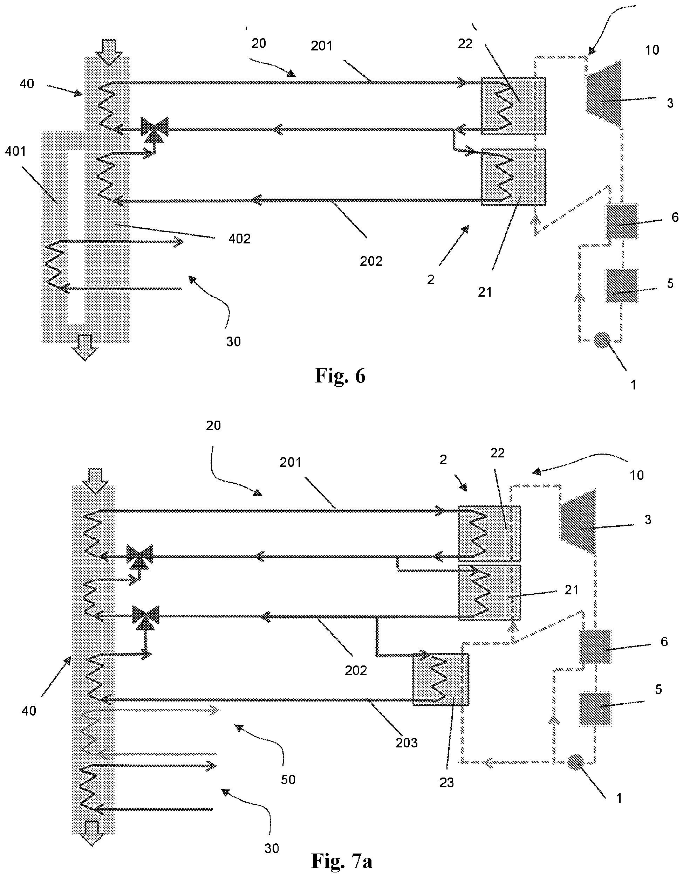

      - Figure 6 shows a plant for a cogenerative ORC plant;

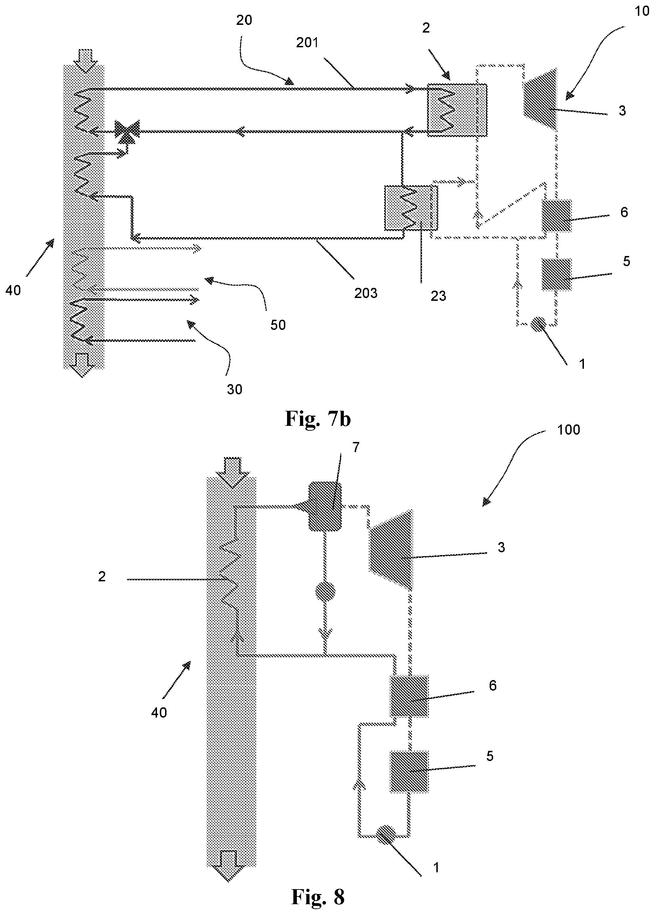

      - Figures 7a and 7b show a diagram of a cogenerative system with an additional recovery outline;
      - Figure 8 shows a direct exchange cogenerative system with a flash evaporation according to the invention;

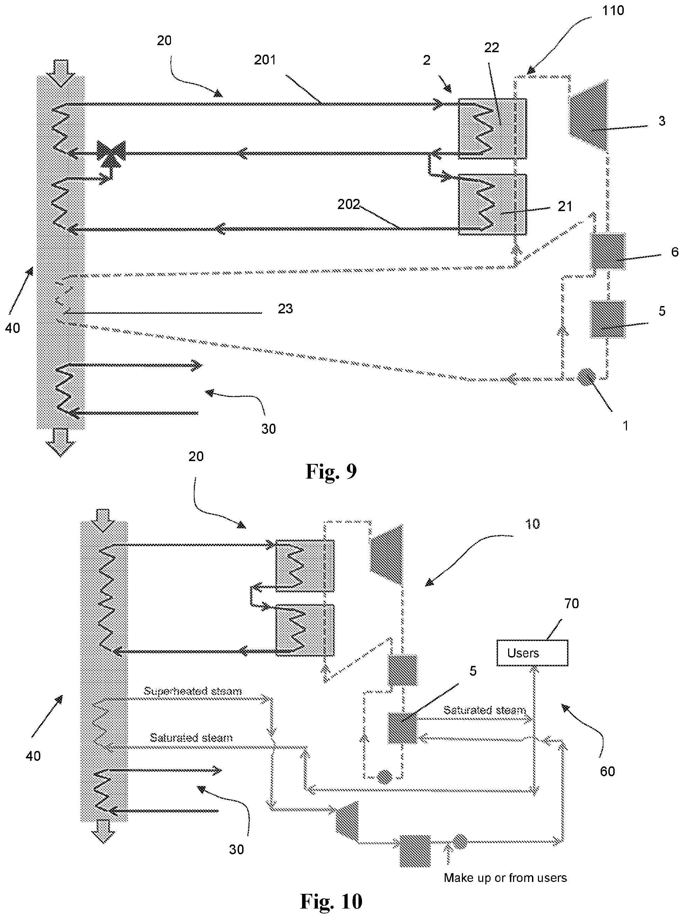

      - Figure 9 is an intermediate solution between a conventional outline with a diathermic oil intermediate circuit and a direct exchange outline not being part of the invention;
   Figures 10 to 11 show different embodiments not being part of the present invention:
      - Figure 10 is a cogenerative ORC system with a steam cascade cycle;

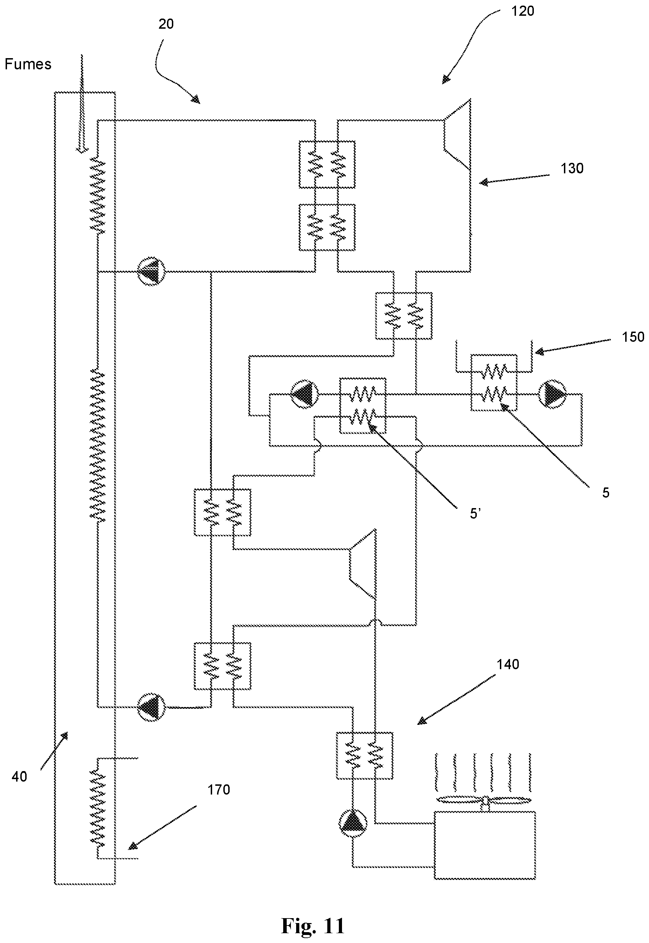

      - Figure 11 shows a further diagram with a thermal carrier oil circuit and two cascade ORC cycles;

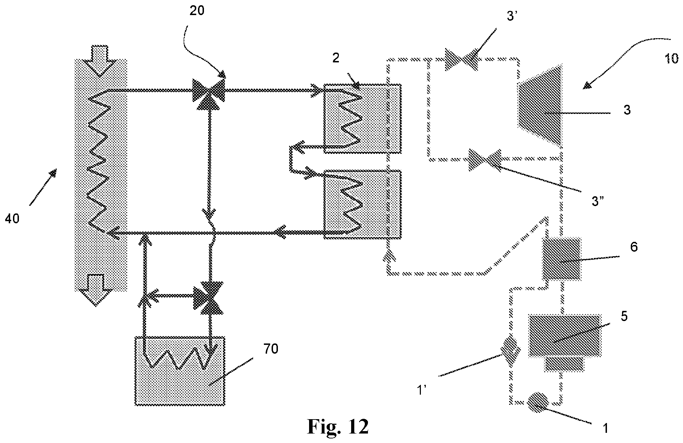

      - Figure 12 shows an exemplary outline of a hot stop;

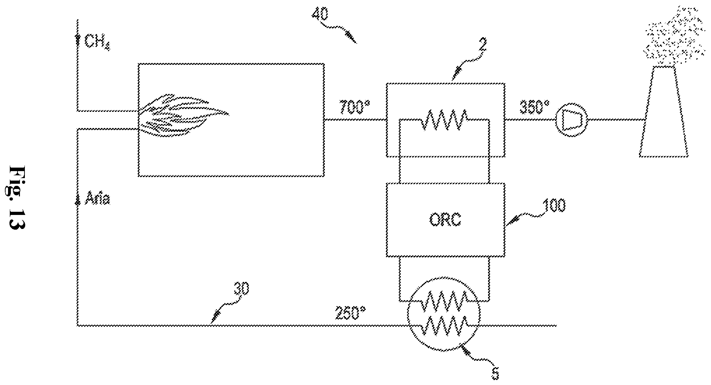

      - Figure 13 is a diagram of a cogenerative ORC system, not being part of the present invention;

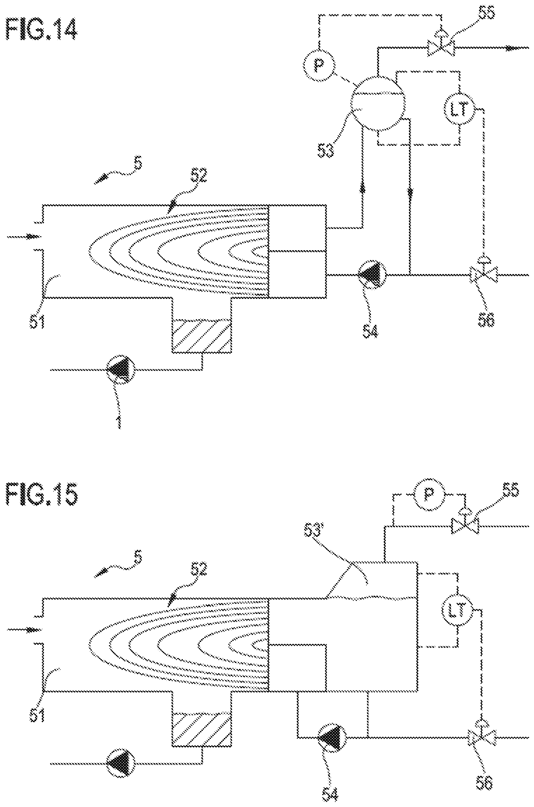

      - Figure 14 is a first embodiment of a condenser of a cogenerative ORC system;
      - Figure 15 is a second embodiment of a condenser of a cogenerative ORC system.

### Detailed description

Premise: the embodiments related to Figs. 4 to 7 and 9-13 are described for completeness but are not part of the present invention.

With reference now to the aforementioned Figures, and particularly to Figure 4, an Organic Rankine Cycle (ORC) system 10 is indicated as a whole. It typically includes at least one power feed pump 1 for feeding an organic working fluid in a liquid phase, to at least one heat exchanger 2. In the heat exchanger, which may in turn include a preheater 21, an evaporator 22 and an overheater (not shown in Fig. 4), the organic fluid is heated until it is transformed into a steam phase and into possible overheating phase. At the output of the heat exchanger, the steam passes through an expansion turbine 3 producing the gross work by the Organic Rankine Cycle, which becomes useful work once having subtracted the work absorbed for driving auxiliary means (pumps, fans, hydraulic units, ...). This useful work is a mechanical work collected at the turbine shaft which is integrally connected to an electric machine. Finally, the working fluid passes through a condenser 5 which returns it in a liquid phase to be delivered from pump 1 back to the heat exchanger. Advantageously, in order to increase the efficiency of the cycle, a heat recovery means 6 can be inserted between the turbine 3 and the condenser 5, i.e. a heat exchanger exchanging heat between the organic fluid in a vapor phase, which is directed from the turbine 3 towards the condenser 5 and the organic fluid in a liquid phase pumped from the pump 1 to the heat exchanger 2.

For high temperature cogenerative applications (saturated steam production at about 190°C), as can be seen in Table 1, the ORC Organic Rankine Cycle system solution according to the present invention shows a ratio between high temperature thermal units and electrical units which is more favorable to a large number of industrial users.

As a matter of fact, if an industry would require high electricity production compared to a high temperature thermal production the convenience scenario would be changed in favor of solutions having higher electrical efficiencies, such as alternative engines or gas turbines.

On the contrary, in many food and process industries an excessive electrical production (excessive means greater then inner demands), is not desirable.

In cases in which thermal power consumption is largely prevalent with respect to electric power consumption, the high first principle performance achieved by the system which is the object of this patent, is particularly advantageous for the final user. On the other hand, the steam turbine solution, which has the same first principle efficiency with respect to the ORC solution, has a ratio between too high thermal power and electrical power which is too great (about twice as much as in the ORC case), which means that its permits an electrical production which is nearly the half of the same thermal power supplied, which value is too low compared to the demands of many industries.

**Table 1**

| | Pₜₕₑᵣₘₐₗ / P_{electrical} | First principle yield |
|---|---|---|
| Alternative engine | 0,41 | 66% |
| TG | 1,79 | 78% |
| ORC | 5, 5 | 910 |
| TV | 10,4 | 910 |

In order that the ORC system works efficiently under high temperature power cogeneration conditions, it is necessary that, first of all, the working organic fluid or diathermic oil (if a thermal carrier fluid is used in an intermediate circuit between the heat source - for example combustion fumes - and the ORC cycle), have a sufficiently high thermochemical stability. For example, the eutectic mixture of diphenyl and diphenyl oxide, commercially known as Therminol^{®}VP-1 or Dowtherm A^{®}, can reach a bulk temperature of 400°C and therefore is suitable for receiving heat in a natural gas boiler. Other possible heat carrier fluids are based on phenyl, terphenyl, quadrifenyl, siloxane, alkylated aromatic hydrocarbons, phenylcyclohexane, bicyclohexyl, perfluoropolyethers (PFPE), melt salts or mixtures thereof.

The mixture of diphenyl and diphenyl oxide can be vaporized and then selected as an ORC organic working fluid. Other high-temperature resistant fluids suitable for use as working fluids are toluene, diphenyl, terphenyl, quadriphenyl, linear hydrocarbons, siloxane, alkylated aromatic hydrocarbons, phenylcyclohexane, bicyclohexyl, perfluoropolyethers and mixtures thereof. Some examples of trade names are SYLTHERM^{®} and HELISOL^{®} 5A (polydimethylsiloxane or siloxane mixtures), Therminol^{®} LT (alkylated aromatic hydrocarbons), Therminol^{®} VP-3 (phenylcyclohexane and bicyclohexyl mixture).

In addition, in order that cogeneration is effective, the ORC system will be characterized by condensation temperatures ranging from 150°C to 250°C and condensing pressures ranging from 50 mbar to 2000 mbar or, more preferably, from 50 mbar to 800 mbar.

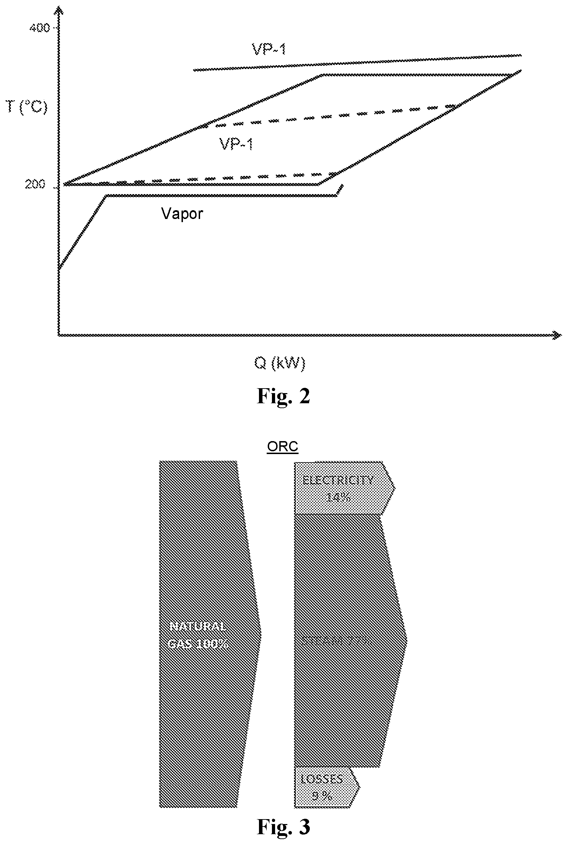

Figure 2 shows an organic Rankine cycle using Therminol VP-1 as a working fluid for a 1,5 MW machine, in which the intermediate oil circuit is also made with Therminol VP-1. Condensation heat is used to produce 10 ton/h of slightly overheated steam at 12 bar.

Figure 3 shows the energy balance of an ORC system according to the present invention. From this Figure it is shown that 140 of the fuel energy is converted into electric energy, whereas 77% becomes a high temperature thermal energy, thus obtaining a ratio between thermal units produced at high temperature and electric units equal to 5,5. It must also be noted in this Figure (as in Fig. 1) that the percentage referred to as losses (Losses) includes both the losses properly stated and the portion of thermal energy which is a low temperature heat which can not be used and is therefore outputted to the environment.

Preferably, a high efficiency ORC cycle with high temperature cogeneration is achieved through working fluids characterized by a ratio between the critical temperature Tc and the evaporation temperature Tv (both expressed in Kelvin), comprised between about 0,7 and 0,95.

In some cases, if the critical temperature is relatively low, for example when toluene is used as an organic working fluid (in the case of toluene the critical temperature Tc is 318°C), it may be useful to produce supercritical cycles according to a further aspect of the present invention.

Should the thermal carrier fluid and the organic working fluid of the ORC coincide, as in the case of Therminol ^{®} VP-1, several advantages are obtained. In fact, it may be useful to have a single recovery or drainage tank in case of maintenance; it is also possible to discharge the output of gases which can not be condensed within the thermal carrie circuit, where the ORC circuit is already in use, or the same ORC circuit system can also be used for the intermediate circuit, thus creating a parallel circuit. Gases which can not be condensed can be treated with appropriate systems, such as activated carbon systems.

Referring to the already mentioned Figure 4, the ORC cycle 10 exchanges heat with an intermediate circuit 20 inside which a thermal carrier fluid is flowing, such as Therminol VP-1. The carrier fluid in turn is heated by the hot source 40, for example from the combustion fumes of a gas fueled boiler (for example with natural gas, off-gas from the process, associated petroleum gas, syngas, landfill gas, biogas, tail gas, etc.), liquid (for example, fuel oil, solvents, hydrocarbons, etc) and/or solid (biomass, pellet, coal, etc). The intermediate circuit may comprise a first high temperature portion 201 placed upstream in the fumes path and a second portion 202 at a lower temperature and placed downstream of the fumes path with respect to the first portion. Alternatively, the two portions may be inverted (relative to the flow of the fumes). In the first portion 201 of the intermediate circuit, the full flow of the thermal carrier fluid passes through the evaporator 22, whereas just a portion of the thermal carrier fluid flow rate flows into the second portion 202 through the preheater 21 of the organic working fluid, as is evident from the different inclination of the VP-1 oil cooling curves in the temperature /power diagram VP-1 of Figure 5 (upper line) . In order to increase the boiler efficiency and thus the overall first principle of the boiler, the comburent air 30 is preheated through a further heat exchanger placed downstream of those used for diathermic oil or more generally of the thermal carrier fluid. Air preheating increases the system efficiency, but increases the flame temperature and thus the emission of NOx nitrogen oxides. In the case of reducing the preheating of air in order to reduce NOx emissions while maintaining a good boiler efficiency (for example, 92%), it is possible to realize a system as shown in Figures 4 and 5 (Figure 5 represents the power temperature diagram of the ORC system of Fig. 4): the entire flow rate of the thermal carrier exchanges heat in the evaporator 22, then it is divided and only a portion of the flow (the one flowing in the second portion 202, at lower temperature of the intermediate circuit) passes through the preheater 21. This solution allows to obtain a lower oil output temperature and to recover more power from the fumes by reducing the amount available for the preheater of the comburent air 30 placed downstream. In a similar solution, the entire flow rate of thermal carrier fluid also performs a small amount of preheating.

Figure 6 shows another example different from that of Fig. 4 due to the fact that the combustion fumes 40 (the hot source) are divided into two portions 401, 402 parallel to each other and the comburent air 30 is preheated only by the fume portion 401.

Other advantageous configurations are possible. In Figure 7a, for example, downstream of the oil exchangers, two additional recoveries are present, one for the production of hot water 50 (or low pressure steam) and one for the preheating of the comburent air 30. Furthermore, oil flows with full flow rate only in the evaporator 22 of the ORC system and in the portion 201 of the intermediate circuit, whereas the other exchangers are fed with only a portion of the total flow rate, the portion 202 of the intermediate circuit. The ORC system is also equipped with a "SPLIT" exchanger 23, which receives a reduced flow rate of thermal carrier fluid, the portion 203 of the intermediate circuit, and preheats a portion of organic fluid coming out of the condenser 5 and bypasses the regenerator 6.

The evaporator and the preheater can be made as a single exchanger 2, as shown in Figure 7b. The flow rates of organic fluid mixed at the exit to the split exchanger 23 and to the regenerator 6 can have the same temperature or different temperatures. According to the invention a direct exchange ORC system, as shown in Figure 8 is realized, in which the organic working fluid which performs the thermodynamic cycle exchanges heat directly with the boiler fumes, without an intermediate circuit. In this case, the organic fluid can evaporate directly inside the boiler or remain in the liquid state and be vaporized by means of a flash evaporator 7, as shown in Figure 8; the fact that the fluid remains liquid inside the boiler is an advantage as localized temperature increases can be better avoided causing thermo-chemical cracking problems: the heat exchange in the steam phase would need the use of a greater number of passes in parallel, with the risk of poor supply of some heat exchange tubes. In addition, a more compact boiler is realized, even if the pump consumptions increase considerably as the flash evaporation is by definition a point of great load loss, as evaporation takes place by means of a lamination which reduces the pressure.

In Figure 9 an ORC system 110 is shown, representing an intermediate solution between a conventional scheme with a diathermy oil intermediate circuit and a direct exchange scheme. Evaporator 22 and preheater 21 of the ORC system receive their heat from an intermediate circuit 20, whereas a "SPLIT" exchanger 23 directly exchanges heat with the combustion fumes 40.

Figure 10 describes a further variation in a simplified way. The ORC system 10 exchanges heat with an intermediate circuit 20, which in this example is completely at full flow rate of diathermic oil. This example is characterized by the fact that there also a steam Rankine cycle system 60 is provided. In practice, water vapor is produced to the condenser 5 of the ORC system and it is used not only by thermal users 70, but it also follows the path of the combustion fumes 40 coming from the boiler. In such zone the steam passes from saturated to overheated and then is conveyed to a steam turbine to produce an additional amount of electric energy. This solution facilitates the heat exchange management which corresponds to the vaporization, by avoiding the phase change in heated surfaces from high temperature fumes and it can be useful in the presence of regulations requiring the presence of a skilled operator where, in the case in which in a water vapor cycle the flame boiler functions as an evaporator. Instead, according to the diagram of Figure 10, the steam is produced by recovering heat from the condenser of the ORC and is then only overheated by the combustion fumes. Therefore there is no water phase change in the boiler.

In Figure 11 an additional and advantageous scheme is shown, with an intermediate circuit 20 of the thermal carrier fluid and an ORC system 120 with two ORC cycles in cascade. The first cycle 130, at high temperature, takes heat from the intermediate circuit; the condensation heat is partially exploited to produce high temperature steam 150 in the exchanger/ condenser 5 and partially to evaporate the organic working fluid of the second cycle 140 at a lower temperature in the heat exchanger/ condenser 5'. The second ORC cycle 140 also takes heat from the intermediate circuit 20. Downstream of the intermediate circuit 20, a possible low temperature thermal recovery 170 can be achieved. This configuration permits to produce cogenerative high temperature steam and at the same time to maintain an electric efficiency comparable to a traditional Rankine cycle of the same power. For example, by using Therminol^{®} VP-1 as an organic working fluid for the first ORC cycle 130 at high temperature and cyclopentane for the second ORC cycle 140 (the one at a lower temperature), downstream of a boiler with a power of approximately 47 MW, a gross electrical power of about 11 MW is obtained, with a gross electrical efficiency of about 23%, by producing a steam flow rate of 10 tons/h at a temperature of 185°C, which is equal to about 7,7 MW. In this case, the ratio between thermal power and electric power is equal t 0,7, with a first principle efficiency for the electric and steam production at 185°C of 39%. In this case, there is a relationship between thermal and lower electric power lower than the ORC solutions described above; however, if we consider a biomass system, also with a solid fuel, alternative internal combustion engines are no longer usable, therefore the only alternative is represented by steam cycles, which in any case have maintenance and installation costs typically higher than those of ORC.

Another advantage of the use of the claimed scheme, that is of an ORC system with high temperature cogeneration is that in the condenser of the ORC system Therminol^{®} VP-1, for example at about 200°C, has a pressure of about 0,24 bar, therefore at a pressure much lower than that of water, for example of 12 bar. Therefore if there is a leakage between the two circuits, water will leak towards the ORC system and not vice versa, and thus the possibility of a water contamination by the VP-1 is excluded. This observation can be important if the system is installed by manufacturing industry (food, chemical, pharmaceutical, etc).

In addition, as at room temperature Therminol^{®} VP-1 has a saturation pressure much lower than the ambient one, when the system is not working the system is strongly under vacuum (as mentioned, with a pressure of about 0, 24 bar at about 200°C and a pressure of about 0,005 bar at 100°C), therefore there is a risk of an air intake. In order to prevent too low a pressure is reached, a "hot and pressurized" stop of the system can be realized, at least in the downstream portion of the feed pump 1 and up to the turbine inlet valve 3. Referring to Figure 12, normally when the system is stopped with a conventional stop, the turbine admission valves 3' are closed, whereas the bypass valve 3" opens, and the return valve 1' downstream of the pump is closed and the pump 1 stops. Progressively, the evaporator 2 is emptied (within a few minutes) and the pressure would drop below the atmospheric pressure until reaching the condensation pressure.

As a contrary to the "hot and pressurized" stop, the pressure can be maintained downstream of the feed pump 1 and up to the intake valve 3' in the turbine, at a desired value, by acting both on the bypass valve 3" (which is pressure controlled) and on the feed pump 1 which is operated with intermittent phases in order to maintain a sufficient level of liquid in the evaporator, which is maintained hot (for example, at a temperature greater than 260°C, that is corresponding to a pressure of about 1 bar) by a small flow rate of diathermic oil.

The heating of oil during the hot stop can be made with a back-up boiler (which typically is already present in cogeneration systems), or according to the diagram of Figure 12, that is the boiler works at the power required to meet the thermal user demands, so that oil leaving the boiler goes to the heat exchangers of the thermal user and to a minimum extent in the exchangers of the ORC. In addition to the vacuum problem, the hot stop allows a faster restart of the system and causes stresses due to lower thermal expansions in the heat exchangers.

The organic working fluid, for example Therminol^{®} VP-1, can advantageously be used as a barrier fluid in the dual pump and turbine seals as claimed in the Italian Patent Applications of the same Applicant No. 102014902289325 and No. 102014902289326. In this way, any possible leakage of the seal will consist of the same working fluid, so avoiding contamination from other lubricating fluids.

The cogenerative organic Rankine cycle, according to an alternative configuration, can be configured so that condensing heat is always used for high temperature cogeneration (T>120°C) but not for steam production.

If a process furnace is in fact considered, for example that of a glass production plant according to the prior art, the fumes exiting from the furnace are used for preheating the combustion air and then are used for generating electric energy through a direct exchange ORC system.

In an alternative configuration according to an aspect not being part of the present invention (Fig. 13), an ORC system 100, the organic fluid of which pertains to one of the groups described above, exchanges heat in the heat exchanger 2 with the combustion fumes 40 exiting from the furnace, whereas the fluid by condensing exchanges heat in the condenser 5 with a gaseous fluid, in particular with the comburent air 30, by preheating the same. The advantage of this configuration is that the ORC is able to maintain a good electrical efficiency despite the "cold" source at 200°C, thanks to a temperature of the hot portion of about 350°C.

Finally, with regard to the ways of implementation of the condenser 5 in cogeneration type ORC systems according to a further aspect of the present invention, the writer considers it useful to realize the condenser according to the Figure 14 diagram. The condenser 5 is a "shell & tube" exchanger, in which the organic vapor to be condensed fills a chamber 51 and impacts against the tube bundle 52 supplied with water. The water exiting from the heat exchanger is in two-phase conditions and reaches a cylindrical body acting as a liquid-vapor separator 53. The vapor goes to the thermal user, whereas the liquid comes back upstream of the condenser, and is mixed with the cold water at the inlet. The separator 53 can be mounted at a certain height in order either to take advantage of the principle of a natural circulation, or it may provide for the installation of a pump 54 (as in Figure 14). The pressure and level of the cylindrical body are regulated by acting on appropriate valves, respectively a first valve 55 for the pressure and a second valve 56 for the level.

A similar configuration is shown in Figure 15 in which the only difference is that the cylindrical separator body 53' is directly formed inside the "water casing" of the condenser 5.

## Claims

1. Organic Rankine cycle system (100, 110) that uses an organic working fluid, and comprises
- at least one feed pump (1) of the organic working fluid in liquid phase,
- at least one heat exchanger (2), which exchanges heat between a hot source (20, 40) and the organic working fluid,
- at least one expansion turbine (3), which expands the vapor of the organic working fluid,
- at least one condenser (5), wherein the condensation heat is used for energy cogeneration purposes at temperatures higher than 120°C,
wherein
- the organic working fluid comprises, in combination or alternatively, toluene, diphenyl oxide, diphenyl, terphenyl, quadriphenyl, linear hydrocarbons, siloxanes, alkylated aromatic hydrocarbons, phenylcycloexane, bicyclohexyl and perfluoropolyethers,
- the condensation heat made available in the condenser (5) is used to pre-heat a gas flow or to produce saturated or superheated steam at a pressure of at least 2 bar,
- said hot source is constituted by combustion or recovery fumes (40) and the organic working fluid exchanges heat directly with said combustion fumes the system being **characterized in that** the organic working fluid is in the liquid phase in the heat exchanger (2) and evaporates in a flash evaporator (7) located upstream of the turbine (3).

2. Organic Rankine cycle system (100, 110) according to claim 1, **characterized in that** the condensation temperature is between 150°C and 250°C and the condensation pressure is comprised between 50 mbar and 2000 mbar.

3. Organic Rankine cycle system (100, 110) according to any of the preceding claims, **characterized in that** for said organic working fluid the ratio between the critical temperature (Tc) and the evaporation temperature (Tv) ranges between 0.7 and 0.95.

4. Organic Rankine cycle system (100, 110) according to any of the preceding claims, **characterized in that** said organic working fluid is based on polydimethylsiloxanes.

5. Organic Rankine cycle system (100, 110) according to any of the preceding claims, **characterized in that** said organic working fluid is a mixture of diphenyl / diphenyl oxide.

6. Organic Rankine cycle system (100, 110) according to any of the preceding claims, **characterized in that** in design conditions the condensation pressure is between 50 mbar and 800 mbar.

7. Organic Rankine cycle system (100, 110) according to any of the preceding claims, **characterized in that** the condenser (5) is a "shell and tube" heat exchanger with a tube bundle (52) fed with water.

## Patentansprüche

1. Organisches Rankine-Kreislaufsystem (100, 110), das ein organisches Arbeitsfluid verwendet und umfasst
- mindestens eine Förderpumpe (1) für das organische Arbeitsfluid in flüssiger Phase,
- mindestens einen Wärmetauscher (2), der Wärme zwischen einer heißen Quelle (20, 40) und dem organischen Arbeitsfluid austauscht,
- mindestens eine Expansionsturbine (3), die den Dampf des organischen Arbeitsfluides entspannt,
- mindestens einen Kondensator (5), in dem die Kondensationswärme bei Temperaturen über 120°C zur Kraft-Wärme-Kopplung genutzt wird,
wobei
- das organische Arbeitsfluid umfasst, in Kombination oder als Alternative, Toluol, Diphenyloxid, Diphenyl, Terphenyl, Quadriphenyl, lineare Kohlenwasserstoffe, Siloxane, alkylierte aromatische Kohlenwasserstoffe, Phenylcyclohexan, Bicyclohexyl und Perfluorpolyether,
- die im Kondensator (5) zur Verfügung gestellte Kondensationswärme wird entweder zum Vorwärmen eines Gasstroms oder zur Erzeugung von gesättigtem oder überhitztem Dampf mit einem Druck von mindestens 2 bar genutzt,
- die Wärmequelle besteht aus Verbrennungs- oder Rückgewinnungsdämpfen (40) und das organische Arbeitsfluid tauscht Wärme direkt mit den Verbrennungsdämpfen aus
wobei das System **dadurch gekennzeichnet ist, dass** das organische Arbeitsfluid im Wärmetauscher (2) in flüssiger Phase vorliegt und in einem vor der Turbine (3) angeordneten Flash-Verdampfer (7) verdampft.

2. Organisches Rankine-Kreislauf-System (100, 110) nach Anspruch 1, **dadurch gekennzeichnet, dass** die Kondensationstemperatur zwischen 150°C und 250°C und der Kondensationsdruck zwischen 50 mbar und 2000 mbar liegt.

3. Organisches Rankine-Kreislauf-System (100, 110) nach einem der vorhergehenden Ansprüche, **dadurch gekennzeichnet, dass** für das organische Arbeitsfluid das Verhältnis zwischen der kritischen Temperatur (Tc) und der Verdampfungstemperatur (Tv) zwischen 0,7 und 0,95 variiert.

4. Organisches Rankine-Kreislauf-System (100, 110) nach einem der vorhergehenden Ansprüche, **dadurch gekennzeichnet, dass** das organische Arbeitsfluid aus Polydimethylsiloxanen besteht.

5. Organisches Rankine-Kreislauf-System (100, 110) nach einem der vorhergehenden Ansprüche, **dadurch gekennzeichnet, dass** das organische Arbeitsfluid eine Mischung von Diphenyl/Diphenyloxid ist.

6. Organisches Rankine-Kreilauf-System (100, 110) nach einem der vorhergehenden Ansprüche, **dadurch gekennzeichnet, dass** unter Auslegungsbedingungen der Kondensationsdruck zwischen 50 mbar und 800 mbar liegt.

7. Organisches Rankine-Kreilauf-System (100, 110) nach einem der vorhergehenden Ansprüche, **dadurch gekennzeichnet, dass** der Kondensator (5) ein "Rohrbündel"-Wärmetauscher mit einem mit Wasser gespeisten Rohrbündel (52) ist.

## Revendications

1. Système à cycle de Rankine organique (100, 110) qui utilise un fluide de travail organique, et comprend
- au moins une pompe d'alimentation (1) du fluide de travail organique en phase liquide,
- au moins un échangeur de chaleur (2), qui échange de la chaleur entre une source chaude (20, 40) et le fluide de travail organique,
- au moins une turbine de détente (3), qui détend la vapeur du fluide de travail organique,
- au moins un condenseur (5), dans lequel la chaleur de condensation est utilisée à des fins de cogénération d'énergie à des températures supérieures à 120°C,
dans lequel
- le fluide de travail organique comprend, en combinaison ou alternativement, du toluène, du diphényloxyde, du diphényle, du terphényle, du quadriphényle, des hydrocarbures linéaires, des siloxanes, des hydrocarbures aromatiques alkylés, du phénylcyclohexane, du bicyclohexyle et des perfluoropolyéthers,
- la chaleur de condensation mise à disposition dans le condenseur (5) est utilisée pour préchauffer un flux gazeux ou pour produire de la vapeur saturée ou surchauffée à une pression d'au moins 2 bars,
- la source de chaleur est constituée de fumées de combustion ou de récupération (40) et le fluide de travail organique échange directement de la chaleur avec les fumées de combustion
le système étant **caractérisé en ce que** le fluide de travail organique est en phase liquide dans l'échangeur de chaleur (2) et s'évapore dans un évaporateur flash (7) situé en amont de la turbine (3).

2. Système à cycle de Rankine organique (100, 110) selon la revendication 1, **caractérisé en ce que** la température de condensation est comprise entre 150°C et 250°C et la pression de condensation est comprise entre 50 mbar et 2000 mbar.

3. Système à cycle de Rankine organique (100, 110) selon l'une des revendications précédentes, **caractérisé en ce que** pour le fluide de travail organique le rapport entre la température critique (Tc) et la température d'évaporation (Tv) varie entre 0,7 et 0,95.

4. Système à cycle de Rankine organique (100, 110) selon l'une des revendications précédentes, **caractérisé en ce que** le fluide de travail organique est à base de polydiméthylsiloxanes.

5. Système à cycle de Rankine organique (100, 110) selon l'une des revendications précédentes, **caractérisé en ce que** le fluide de travail organique est un mélange de diphényl/diphényloxyde.

6. Système à cycle de Rankine organique (100, 110) selon l'une des revendications précédentes, **caractérisé en ce que** dans les conditions de conception la pression de condensation est comprise entre 50 mbar et 800 mbar.

7. Système à cycle de Rankine organique (100, 110) selon l'une des revendications précédentes, **caractérisé en ce que** le condenseur (5) est un échangeur de chaleur "à calandre et tube" avec un faisceau de tubes (52) alimenté en eau.
